# EUROPEAN PATENT APPLICATION

(11) **EP 4 401 275 A2**
(43) Date of publication of application: **17.07.2024**
(21) Application number: 24150810.0
(22) Date of filing: 09.01.2024
(51) Int. Cl.: H02J 7/00, B60L 58/22, H01M 10/42

(54) **BATTERY PACK WITH A MULTIPLEXER**

(30) Priority: 16.01.2023 KR 20230006134
(71) Applicant: Samsung SDI Co., Ltd., Yongin-si, Gyeonggi-do 17084 (KR)
(72) Inventor: Bae, Jeong Guk, 17084 Yongin-si, Gyeonggi-do (KR)
(74) Representative: Gulde & Partner

(57) **Abstract**

A battery pack (100) includes a first battery module (110); a second battery module (120) that is serially connected to the first battery module; and a master board (130) that is electrically connected to the first and second battery modules, respectively. The master board includes a first power line (131) that is connected to a positive terminal of the first battery module; a second power line (132) that is connected to the positive terminal of the second battery module; a multiplexer circuit (133) that is connected to the first and second power lines and is connected to one of the first and second battery modules, having a relatively higher voltage; a DC-DC converter (134) that is connected to the MUX circuit and performs DC-DC conversion; and a control unit (135) that receives driving power from the DC-DC converter.

## Description

### BACKGROUND

### 1. Field

The present disclosure relates to a battery pack.

### 2. Description of the Related Art

In general, an electric vehicle includes a high voltage battery, such as a lithium ion battery, and a low voltage battery, such as a lead acid battery. The high voltage battery mainly provides energy required for driving the electric vehicle, and the low voltage battery mainly provides energy required for driving the battery pack system.

Therefore, conventionally, there is a problem in that the safety of an electric vehicle may be degraded due to not only an increase in the additional costs caused by the low-voltage battery but also a defect of the low-voltage battery itself, or fluctuations in the power supplied to a vehicle (e.g., power supply voltage drop, jump, disconnection, noise, poor connection, etc.).

In particular, there is also a problem with a high possibility of loss of pack-related history (e.g., battery impedance, battery capacity, data required for battery life calculation, and user history) stored in a system memory due to power instability of a pack master board.

### SUMMARY

Embodiments of the present disclosure provide a battery pack which does not require a low-voltage auxiliary battery, and can supply power to a control unit of a master board by performing DC-DC conversion by receiving power from a battery module having the highest voltage among a plurality of battery modules connected in series.

Embodiments according to a first aspect are directed to a battery pack having a first battery module, a second battery module serially connected to the first battery module, and a master board electrically connected to the first battery module and the second battery module, wherein the master board includes a first power line connected to a positive terminal of the first battery module, a second power line connected to the positive terminal of the second battery module, a multiplexer (MUX) circuit connected to the first power line and the second power line and connected to one of the first battery module and the second battery module, having a relatively higher voltage among the first battery module and the second battery module, a direct current-to-direct current (DC-DC) converter connected to the multiplexer (MUX) circuit and configured to perform DC-DC conversion, and a control unit configured to receive driving power from the DC-DC converter.

In an implementation, voltages of the first battery module and the second battery module are balanced by the multiplexer (MUX) circuit.

Balancing refers to that the voltages of at least two battery modules are made equal by charging the battery module with the lower voltage and/or discharging the battery module with the lower voltage.

By balancing with the multiplexer used for providing power to the control unit, a discrete balancing circuit can be dispensed with.

In embodiments, the battery pack further includes a voltage sensor, wherein the voltage sensor transmits voltage information of each of the first battery module and the second battery module to the control unit.

In embodiments, each of the first battery module and the second battery module provides a first voltage, a voltage difference between the first battery module and the second battery module is a second voltage, and the DC-DC converter provides a third voltage, the first voltage being greater than the second voltage, and the second voltage being less than the third voltage.

In embodiments, the first voltage ranges from 50 V to 70 V, the second voltage ranges from 1 V to 2 V, and the third voltage ranges from 10 V to 14 V.

In embodiments, the second voltage ranges from 0.5 V to 3 V.

When a comparatively high value for the second voltage is selected, switching between the first battery module and the second battery module may occur less often than when selecting a comparatively low value. Then, switching may occur more often.

In embodiments, if a voltage of the first battery module is higher than a voltage of the second battery module, the control unit is configured to receive power from the first battery module by connecting the DC-DC converter to the first battery module using the multiplexer (MUX) circuit, and if the voltage of the second battery module is higher than the voltage of the first battery module, the control unit is configured to receive power from the second battery module by connecting the DC-DC converter to the second battery module using the multiplexer (MUX) circuit.

Thereby, balancing between the first battery module and the second battery module is performed.

In embodiments, the multiplexer (MUX) circuit includes a first switch connected to the first power line, and a second switch connected to the second power line, wherein the control unit is configured to turn on and off the first switch and the second switch. Preferably, when the first switch is turned on, the second switch is turned off and when the second switch is turned on, the first switch is turned off.

In embodiments, the multiplexer circuit further includes a third switch connected to the first power line and a fourth switch connected to the second power line, wherein the control unit is configured to turn on and off the third switch and the fourth switch.

In embodiments, for a number of battery modules N, (N-1) switches are included.

In embodiments, the switches are single pole dual throw switches and the single pole is connected to the DC-DC converter the dual throw side of the switch is connected to two different battery modules.

In embodiments, the DC-DC converter includes a primary-side capacitor connected in parallel between the first power line and the second power line, a primary-side winding wire connected in parallel between the first power line and the second power line, a switching element connected between the primary-side winding wire and the second power line, a secondary-side winding wire electromagnetically coupled to the primary-side winding wire, a rectifier diode connected to one end of the second winding, and a secondary-side capacitor connected in parallel to one end and the other end of the secondary-side winding wire, wherein the control unit is configured to control the switching element.

In embodiments, the control unit is configured to control the switching element in a pulse width modulation manner.

### BRIEF DESCRIPTION OF DRAWINGS

Features will become apparent to those of ordinary skill in the art by describing in detail exemplary embodiments with reference to the attached drawings, in which:
FIG. 1 is a block diagram illustrating a configuration of an exemplary battery pack; and
FIG. 2 is a circuit diagram illustrating a configurations of a multiplexer (MUX) circuit and a DC-DC converter in an exemplary battery pack.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

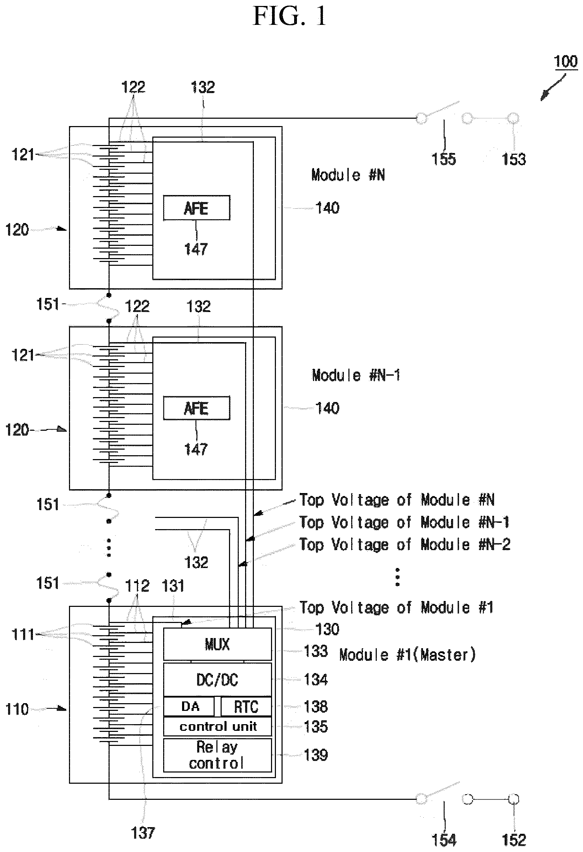

FIG. 1 is a block diagram illustrating a configuration of an exemplary battery pack 100. As shown in FIG. 1, the exemplary battery pack 100 according to the present disclosure may include a first battery module 110, one or more second battery modules 120, and respectively a master board 130, and one or more slave boards 140.

In an embodiment, the battery modules 110, 120 may further include a first battery module 110 and one to an Nth second battery modules 120 (where N is a natural number from 2 to, e.g., 1000). In an embodiment, the master board 130 may be electrically and/or mechanically coupled to any one of a plurality of the battery modules 110, 120, and the slave board 140 may be electrically/mechanically coupled to the remainder of the battery modules 110, 120.

The following description will be given by way of example with respect to a case in which the master board 130 is coupled to the first battery module 110 and the one or more slave boards 140 are coupled respectively to the one or more second battery modules 120.

In addition, the remainder of the battery modules 120 other than the first battery module 110 are referred to as the second battery modules 120. In addition, in the following description, the first battery module 110 and one of the second battery modules 120, which is closest to the first battery module 110, are referred to as two battery modules that are closest to each other.

The first battery module 110 may include a plurality of battery cells 111. In some embodiments, the plurality of battery cells 111 may be connected in series and/or parallel. In some embodiments, the battery cells 111 may include or be referred to as lithium ion batteries, lithium ion polymer batteries, lithium iron phosphate batteries, or all-solid-state batteries. In some embodiments, the first battery module 110 may provide a DC voltage of about 50 V to about 70 V, preferably about 60 V. In some embodiments, the first battery module 110 may further include measurement electronics, for example a voltage sensor (not shown) and sensing wires 112 that sense a cell voltage and/or a module voltage of a respective battery cell111. In some embodiments, the first battery module 110 may be defined as a configuration including the plurality of battery cells 111 and the master board 130.

Each second battery module 120 may include a plurality of battery cells 121. In some embodiments, each second battery module 120 may further include measurement electronics, for example a voltage sensor (not shown) and a respective sensing wire 122 that senses a cell voltage and/or a module voltage of a respective battery cell 121. The second battery module 120 may have the same or similar configuration as the first battery module 110. In some embodiments, each slave board 140 may be electrically connected to the master board 130. Each slave board 140 may also be connected to the master board 130 so that the slave board 140 and the master board 130 are in communication with each other. In some embodiments, each second battery module 120 may be defined as a configuration including the respective plurality of battery cells 121 and the slave board 140.

In some embodiments, each of the first and second battery modules 110 and 120 may provide a first DC voltage, and, for example, the first DC voltage may be in a range of about 50 V to about 70 V. In addition, in some embodiments, a voltage difference between the first and second battery modules 110 and 120 may be a second DC voltage, and, for example, the second DC voltage may be in a range of about 1 V to about 2 V.

In some embodiments, the first battery module 110 and the second battery modules 120 may be electrically connected in series and/or parallel through a bus bar 151.

In some embodiments, a battery pack negative electrode terminal 152 may be electrically connected to a negative electrode terminal of the first battery module 110, and a battery pack positive electrode terminal 153 may be electrically connected to a positive electrode terminal of one of the second battery modules 120.

In some embodiments, a negative electrode relay 154 may be connected between the battery pack negative electrode terminal 152 and the first battery module 110, and a positive electrode relay 155 may be connected between the battery pack positive electrode terminal 153 and one of the second battery modules 120.

The master board 130 may include first and second power lines 131 and 132, a multiplexer (MUX) circuit 133, a direct current-to-direct current (DC-DC) converter 134, and a control unit 135.

In some embodiments, the master board 130 may further include a data acquisition (DA) unit 137, a real time clock (RTC) 138, and a relay control 139. In some embodiments, the voltage sensor and the sensing wires 112 may be treated as components of the master board 130.

The first power line 131 may be connected to the positive electrode terminal of the first battery module 110 to transmit the highest voltage of the first battery module 110 to the MUX circuit 133. The second power line 132 may be connected to the positive electrode terminal of the second battery module 120 to transmit the highest voltage of the second battery module 120 to the MUX circuit 133. In an embodiment, if there are a total of N first battery modules 110 and second battery modules 120, the number of first and second power lines 131, 132 may also be N.

In some embodiments, the second power line 132 of each second battery module 120 may be electrically connected to the master board 130 via the slave board 140. In some embodiments, the power lines may include or be referred to as module top voltage lines. In some embodiments, the first and second power lines 131 and 132 may further include printed circuit board patterns and connectors. In some embodiments, the first and second power lines 131 and 132 may be electrically connected to the MUX circuit 133 of the master board 130 through connectors, respectively.

As will be described again below, the MUX circuit 133 may be electrically connected to the first and second power lines 131 and 132 to select a battery module having a relatively higher voltage among the first and second battery modules 110 and 120. Herein, a "relatively higher voltage" means the highest voltage among the battery modules 110, 120 which are connected.

In some embodiments, the MUX circuit 133 may be electrically connected to a battery module having a relatively higher voltage, of the first and second battery modules 110 and 120. Thus, power of the battery module having a relatively higher voltage may be supplied to the control unit 135.

In some embodiments, the MUX circuit 133 may be connected to the battery module among the first and second battery modules 110, 120 having a relatively higher voltage so that power is consumed. Thus, balancing between the first and second battery modules 110, 120 may proceed naturally. In other words, the battery module among the first and second battery modules 110, 120 having a relatively higher voltage may provide power to the control unit 135, which consumes power. Thus, the voltages of the plurality of first and second battery modules 110, 120 in the battery pack 100 may be balanced.

The DC-DC converter 134 may be connected to the MUX circuit 133 to convert power supplied from the selected battery module and provide the converted power to the control unit 135. In some embodiments, the DC-DC converter 134 may include or be referred to as a fly-back converter or an LLC resonant converter. In some embodiments, the DC-DC converter 134 may provide a third DC voltage to the control unit 135, and, for example, the third DC voltage may range from approximately 10 V to approximately 14 V.

The control unit 135 may receive driving power from the DC-DC converter 134 and performs various control operations. The control unit 135 may include or be referred to as an integrated circuit, a microcomputer, a microcontroller, a controller, or a semiconductor chip. The control unit 135 may be, for example, a Universal Control Module (uCoM).

The voltage sensor (not shown) may sense a cell voltage and/or a module voltage and transmit the same to the master board 130 through the sensing wires 112. In some embodiments, the voltage sensor may transmit voltages of individual battery cells and/or module voltages to the data acquisition unit 137 via the respective sensing wire 112.

The data acquisition unit 137 may acquire a cell voltage and/or a module voltage of an individual battery cell 111 by being connected to the respective sensing wires 112. In some embodiments, the data acquisition unit 137 may include or be referred to as an analog front end.

The real time clock 138, e.g., a timer, may provide a reference clock which may be necessary for the operation of the control unit 135.

The relay control 139, which may be, for example, a relay controller, may control the negative electrode relay 154 and/or the positive electrode relay 155 according to a control command of the control unit 135.

The slave board 140 may also include a data acquisition (DA) unit 147. In some embodiments, the voltage sensors and the sensing wires 122 may be treated as components of the slave board 140.

In some embodiments, data acquired by data acquisition unit 147 may be transmitted to control unit 135 of master board 130 through a communication line. In some embodiments, the slave board 140 may include a printed circuit board pattern that transmits the highest voltage of the battery module to the MUX circuit 133 of the master board 130. In other words, the slave board 140 may include a printed circuit board pattern to which power lines are connected.

In this way, in the battery pack 100 according to the present disclosure, the control unit 135 may check voltages of the first battery module 110 and the second battery modules 120 received from the data acquisition unit 137 of the master board 130 and the respective data acquisition unit 147 of the slave boards 140.

Accordingly, the control unit 135 may receive power by connecting the DC-DC converter 134 to the battery module having a higher voltage, of the first and second battery modules 110 and 120, by using the MUX circuit 133. Meanwhile, during the operation of the battery pack 100, the battery module among the first and second battery modules 110, 120 having the highest voltage may be changed at any time, and at this time, the control unit 135 may manipulate a switch provided in the MUX circuit 133 to allow the DC-DC converter 134 to be connected to a battery module having the highest voltage.

In this way, in the present disclosure, the master board 130 may receive power required for its own operation from the battery module to which the master board 130 is coupled or the battery module to which the slave board 140 is coupled, among the first and second battery modules 110, 120.

Moreover, in the present disclosure, the master board 130 (that is, the control unit 135) may receive power from the battery module among the first and second battery modules 110, 120 having the highest voltage, thereby automatically performing module balancing within the battery pack 100.

In addition, in the present disclosure, the battery pack 100 having an independent power source, without a lead-acid battery (low-voltage battery or auxiliary battery) is provided. Thus, a separate pack voltage sensor and/or a module voltage sensor may be omitted, thereby reducing sensor installation costs.

In addition, compared to an existing structure in which power necessary for the system is supplied from outside the pack system, the battery pack 100 according to the present disclosure can maintain a permanent wake-up state. Therefore, for example, regardless of whether the electric vehicle is operating or not, system power can be operated at all times, thereby enabling continuous monitoring of the battery pack 100 and continuous storage of history according to pack operation conditions.

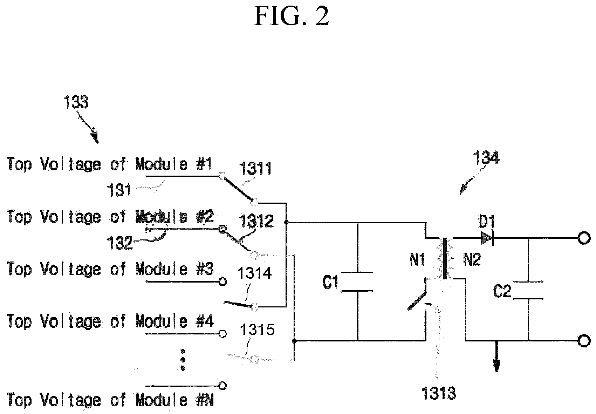

FIG. 2 is a circuit diagram illustrating configurations of a MUX circuit 133 and a DC-DC converter 134 in an exemplary battery pack 100.

As described above, if the voltage of the first battery module 110 is higher than the voltage of the second battery module 120, the control unit 135 may receive power from the first battery module 110 by allowing the DC-DC converter 134 to be connected to the first battery module 110 by using the MUX circuit 133. If the voltage of the second battery module 120 is higher than the voltage of the first battery module 110, the control unit 135 may receive power from the second battery module 120 by allowing the DC-DC converter 134 to be connected to the second battery module 120 by using the MUX circuit 133. Each of the first battery module 110 and the second battery module 120 provides a first voltage, a voltage difference between the first battery module 110 and the second battery module 120 is a second voltage, and the DC-DC converter 134 provides a third voltage, the first voltage being greater than the second voltage, and the second voltage being less than the third voltage.

In some embodiments, the switching from the first battery module 110 to the second battery module 120 may be delayed until the voltage of first battery module 110 is below the voltage of the second battery module 120 or vice versa. Optionally, the switching from the first battery module 110 to the second battery module 120 may be delayed until the second voltage has inverted. In other words, when the first battery module 110 has a higher voltage than the second battery module 120, before switching from the first battery module 110 to the second battery module 120, the voltage difference between the first battery module 110 and the second battery module 120 (referred to as second voltage) inverts from a positive voltage to a negative voltage. Then, the initially connected first battery module 110, now having a lower voltage than the second battery module 120, is disconnected and the second battery module 120 or any other available battery module with a higher voltage is connected.

To this end, the MUX circuit 133 may include a first switch 1311 and a second switch 1312. The first switch 1311 may be electrically connected to the first power line 131. In other words, the first switch 1311 may be electrically connected to the first battery module 110 via the first power line 131. The second switch 1312 may be electrically connected to the second power line 132. In other words, the second switch 1312 may be electrically connected to the second battery module 120 via the second power line 132.

The MUX circuit 133 may further include a third switch 1314 and a fourth switch 1315. The third switch 1314 may be electrically connected to a third power line. In other words, the third switch 1314 may be electrically connected to a third battery module via the third power line. The fourth switch 1315 may be electrically connected to the fourth power line. In other words, the fourth switch 1315 may be electrically connected to a fourth battery module via a fourth power line.

In some embodiments, a plurality of first switches 1311 may be provided in parallel, and a plurality of second switches 1312 may also be provided in parallel. Accordingly, even if another battery module exists between the first and second battery modules 110 and 120, such as illustrated in FIG. 1, the operation of the present disclosure may be implemented. In other words, even in a state in which the first and second battery modules 110 and 120 are spaced apart further from each other, rather than being closest to each other, the operation of the present disclosure may be implemented in the same or similar manner as described above.

The control unit 135 may control the switches. The control unit 135 may turn on and/or turn off the first switch 1311 and the second switch 1312. The first switch 1311 and the second switch 1312 may be single pole dual throw switches. In some embodiments, each of the first switch 1311 and the second switch 1312 may include or be referred to as a metal-oxide-semiconductor field-effect transistor (MOSFET) or an insulated-gate bipolar transistor (IGBT).

The DC-DC converter 134 may include a primary-side capacitor C1, a primary-side winding wire N1, a switching element 1313, a secondary-side winding wire N2, a rectifier diode D1, and a secondary-side capacitor C2. The primary-side capacitor C1 may be connected in parallel between the first power line 131 and the second power line 132. The primary-side winding wire N1 may be connected in parallel between the first power line 131 and the second power line 132. In other words, the primary-side winding wire N1 may be connected in parallel to the primary-side capacitor C1. The switching element 1313 may be connected between the primary-side winding wire N1 and the second power line 132. The secondary-side winding wire N2 may be electromagnetically coupled to the primary-side winding wire N1. The rectifier diode D1 may be connected to one end of the secondary-side winding wire N2, and the secondary-side capacitor C2 may be connected to one end and the other end of the secondary-side winding wire N2 in parallel. In some embodiments, the switching element 1313 may also include or be referred to as a MOSFET or IGBT.

As such, as the control unit 135 controls the switching element 1313 in a pulse width modulation (PWM) method, the energy accumulated in the primary-side winding wire N1 is transferred to the secondary-side winding wire N2, and eventually, the DC voltage smoothed by the operation of the rectifier diode D1 and the secondary-side capacitor C2 may be provided to the control unit 135.

In this way, the MUX circuit 133 and the DC-DC converter 134 can simultaneously perform module balancing and power supply operations.

For example, if the voltage of the first battery module 110 is determined to be higher than the voltage of the second battery module 120, the control unit 135 may turn on both of the first switch 1311 and the second switch 1312 of the MUX circuit 133, and may then control the switching element 1313 of the DC-DC converter 134 in a PWM manner. Then, the energy of the first battery module 110 having a relatively high voltage is transferred to the second battery module 120 having a relatively low voltage through the first switch 1311, the primary-side capacitor C1, and the primary-side winding wire N1, and at the same time, some of the energy is transferred to the secondary-side winding wire N2. In addition, the DC voltage rectified due to the smoothing operation of the rectifier diode D1 and the secondary-side capacitor C2 of the DC-DC converter 134 may be supplied to the control unit 135. In other words, the MUX circuit 133 and the DC-DC converter 134 may simultaneously perform a module balancing operation and a power supply operation to the control unit 135.

As described above, the present disclosure may provide a battery pack in which a pack system control unit selects a battery module having the highest voltage among a plurality of battery modules and receives power required for driving the pack system control unit from the battery module. Accordingly, the present disclosure does not require a conventional low-voltage auxiliary battery.

In addition, the present disclosure may provide a battery pack which is configured to automatically perform balancing between a plurality of battery modules. Power is received from a battery module having the highest voltage among the plurality of battery modules. Accordingly, the present disclosure does not require a passive or active cell balancing circuit, unlike in the prior art.

While the foregoing embodiment has been described to practice the exemplary battery pack according to the present disclosure, it should be understood that the embodiment described herein should be considered in a descriptive sense only and not for purposes of limitation, and various changes in form and details may be made therein without departing from the scope of the disclosure as defined herein.

In order to solve the previously described problems, there has been proposed a method for supplying power to a system memory even in a state in which there is no external power supply, by arranging coin cells in the master board. However, the proposed method has problems in that the amount of data stored in the memory is extremely limited due to the limitation of output power of a coin cell, and the lifetime of the coin cell is short.

Alternatively, self-power required for a system operation can be obtained through battery modules inside a battery pack. However, if the power required for a pack system operation is extracted from a battery pack in the form of a serial structure between modules, there is a problem of increasing voltage imbalance between the modules.

As another method, there has been proposed an operating method by stepping down a pack voltage from a topmost module and performing direct current-to-direct current (DC-DC) conversion. However, due to losses caused by the efficiency of DC-DC converters in the current trend of increasing pack voltages (e.g., 800V and above), and to withstand voltage limits of integrated circuits, this method has various problems (e.g., increased costs, restrictions regarding sufficient separation distances, lack of integrated circuit product groups for power, etc.).

In the accompanying drawings, sizes of various components may be exaggerated for brevity and clarity. Like numbers refer to like elements throughout. As used herein, the term "and/or" includes any and all combinations of one or more of the associated listed items. In addition, it will be understood that if an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," if used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, and/or section from another. Thus, for example, a first member, a first element, a first region, and/or a first section discussed herein could be termed a second member, a second element, a second region, and/or a second section without departing from the teachings herein.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

In addition, a control unit (controller) and/or other related devices or components, according to the present disclosure, may be implemented by using any suitable hardware, firmware (e.g., application specific semiconductor), software, or a suitable combination of software, firmware, and hardware. For example, the control unit (controller) and/or other related devices or components, according to the present disclosure, may be formed on a single integrated circuit chip, or separate integrated circuit chips. In addition, various components of the control unit (controller) may be implemented on a flexible printed circuit film, and may be formed on a substrate identical to a tape carrier package, a printed circuit board, or a control unit (controller). In addition, various components of the control unit (controller) may be a process or thread, running on one or more processors, in one or more computing devices, executing computer program instructions and interacting with other system components for performing the various functionalities described above. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. In addition, a person skilled in the art should recognize that the functionality of various computing devices may be combined or integrated into a single computing device, or the functionality of a particular computing device may be distributed across one or more other computing devices without departing from the scope of the exemplary embodiments of the present disclosure.

Example embodiments have been disclosed herein, and although specific terms are employed, they are used and are to be interpreted in a generic and descriptive sense only and not for purpose of limitation. Accordingly, it will be understood by those of skill in the art that various changes in form and details may be made without departing from the scope of the present invention as set forth in the following claims.

## Claims

1. A battery pack (100), comprising:
a first battery module (110);
a second battery module (120) serially connected to the first battery module (110); and
a master board (130) electrically connected to the first battery module (110) and the second battery module (120),
wherein the master board (130) comprises:
a first power line (131) connected to a positive terminal of the first battery module (110);
a second power line (132) connected to the positive terminal of the second battery module (120);
a multiplexer circuit (133) connected to the first power line (131) and the second power line (132) and connected to one of the first battery module (110) and the second battery module (120), having a relatively higher voltage among the first battery module (110) and the second battery module (120);
a direct current-to-direct current DC-DC converter (134) connected to the multiplexer circuit (133) and configured to perform DC-DC conversion; and
a control unit (135) configured to receive driving power from the DC-DC converter (134).

2. The battery pack (100) as claimed in claim 1, wherein voltages of the first battery module (110) and the second battery module (120) are balanced by the multiplexer circuit (133).

3. The battery pack (100) as claimed in claim 1 or 2, further comprising a voltage sensor, wherein the voltage sensor transmits voltage information of each of the first battery module (110) and the second battery module (120) to the control unit (135).

4. The battery pack (100) as claimed in any one of the preceding claims, wherein each of the first battery module (110) and the second battery module (120) provides a first voltage, a voltage difference between the first battery module (110) and the second battery module (120) is a second voltage, and the DC-DC converter (134) provides a third voltage, the first voltage being greater than the second voltage, and the second voltage being less than the third voltage.

5. The battery pack (100) as claimed in claim 4, wherein the first voltage ranges from 50 V to 70 V, the second voltage ranges from 1 V to 2 V, and the third voltage ranges from 10 V to 14 V.

6. The battery pack (100) as claimed in claim 4, wherein the second voltage ranges from 0.5 V to 3 V.

7. The battery pack (100) as claimed in any one of the preceding claims, wherein if a voltage of the first battery module (110) is higher than a voltage of the second battery module (120), the control unit (135) is configured to receive power from the first battery module (110) by connecting the DC-DC converter (134) to the first battery module (110) using the multiplexer circuit (133), and if the voltage of the second battery module (120) is higher than the voltage of the first battery module (110), the control unit (135) is configured to receive power from the second battery module (120) by connecting the DC-DC converter (134) to the second battery module (120) using the multiplexer circuit (133).

8. The battery pack (100) as claimed in any one of the preceding claims, wherein the multiplexer circuit (133) comprises:
a first switch (1311) connected to the first power line (131); and
a second switch (1312) connected to the second power line (132),
wherein the control unit (135) is configured to turn on and off the first switch (1311) and the second switch (1312).

9. The battery pack (100) as claimed in the preceding claim, wherein the multiplexer circuit (133) further comprises:
a third switch (1314) connected to the first power line (131); and
a fourth switch (1315) connected to the second power line (132),
wherein the control unit (135) is configured to turn on and off the third switch (1314) and the fourth switch (1315).

10. The battery pack (100) as claimed in any one of the preceding two claims, wherein for a number of battery modules N, (N-1) switches are comprised.

11. The battery pack (100) as claimed in any one of the preceding three claims, wherein the switches are single pole dual throw switches and the single pole is connected to the DC-DC converter (134) the dual throw side of the switch is connected to two different battery modules.

12. The battery pack (100) as claimed in any one of the preceding claims, wherein the DC-DC converter (134) comprises:
a primary-side capacitor (C1) connected in parallel between the first power line (131) and the second power line (132);
a primary-side winding wire (N1) connected in parallel between the first power line (131) and the second power line (132);
a switching element (1313) connected between the primary-side winding wire (N1) and the second power line (132);
a secondary-side winding wire (N2) electromagnetically coupled to the primary-side winding wire (N1);
a rectifier diode (D1) connected to one end of the second winding (N2); and
a secondary-side capacitor (C2) connected in parallel to one end and the other end of the secondary-side winding wire (N2),
wherein the control unit (135) is configured to control the switching element (1313).

13. The battery pack (100) as claimed in the preceding claim, wherein the control unit (135) is configured to control the switching element (1313) in a pulse width modulation manner.
